# EUROPEAN PATENT SPECIFICATION

(11) **EP 1 973 412 B1**
(45) Date of publication and mention of the grant of the patent: **17.04.2013**
(21) Application number: 07700146.9
(22) Date of filing: 05.01.2007
(51) Int. Cl.: A23C 9/142, A23C 9/15

(54) **LOW-CARBOHYDRATE MILK WITH ORIGINAL CALCIUM**
KOHLENHYDRATARME MILCH MIT URSPRÜNGLICHEM CALCIUMGEHALT
LAIT À FAIBLE TENEUR EN HYDRATES DE CARBONE ET À TENEUR EN CALCIUM CONSERVÉE

(30) Priority: 05.01.2006 US 756213 P
(43) Date of publication of application: 01.10.2008
(73) Proprietor: Arla Foods Amba, 8260 Viby J (DK)
(72) Inventor: LAURITZEN, Karsten, DK-8260 Viby J (DK); HOLST, Hans, Henrik, DK-8260 Viby J (DK)
(74) Representative: Zacco Denmark A/S
(86) International application number: PCT/DK2007/000005
(87) International publication number: WO 2007/076873

(56) References cited:
- EP-A1- 1 031 288
- EP-A2- 1 147 712
- WO-A-00/51440
- WO-A-2004/075666
- WO-A-2006/087409
- FR-A1- 2 809 595

## Description

### Technical field of the Invention

The object of the present invention is to produce a stabilizer-free, palatable low-calorie milk product with essentially all of the original milk minerals, in particular calcium, and all milk proteins, and with a reduced content of lactose.

The milk product provided contains no added calcium, and hence is not calcium fortified. Normally, it is expedient not to remove all lactose for reasons of taste. It is possible, however, to remove more lactose if the product is to be suitable for people with lactose intolerance.

Another object is to provide a process for manufacturing of such a milk product.

### Background of the invention

When milk is subjected to ultrafiltration (UF) like in the cheese making process, the calcium/protein ratio will be reduced because dissolved calcium is removed with the permeate.

From the marketing point of view there is a potential need for a milk which contains the same calcium/protein ratio as milk, but without fortification, and without the energy input and flavour associated with normal market milk. This potential is seen in the well-documented fact that young people, as they grow older, switch from drinking milk to drinking non-milk products - still, however, being aware of their need for calcium.

Thus, it is of great potential to succeed in producing and commercializing milk giving the same calcium/protein ratio and fewer calories than normal milk. But there is also a great potential in producing a milk with a neutral and refreshing taste and having no water taste or other off-flavours that would have to be masked by flavouring agents.

It is the object of the invention to produce a low-carbohydrate milk by membrane filtration where the calcium reduction is kept as low as possible and the taste as good as possible.

Various attempts have been made to reintroduce calcium, including calcium removed in the ultrafiltration process. However, this has caused problems with precipitation of lime particles in the milk and an undesired limy taste.

Attempts have been made to solve this problem by use of stabilizers, but such additives are of course undesired in a milk product.

WO 2004/075666 A2 discloses a milk product that has a reduced or low-carbohydrate content and has organoleptic qualities and mouth feel similar to those of whole milk comprising carbohydrates in a range of about 0.0152 g/cm³ to about 0.0254 g/cm³; protein in a range of about 0.0338 g/cm³ to about 0.0676 g/cm³; and fat in a range of about 0.038 g/cm³ to about 0.0465 g/cm³. This product is prepared by a process for manufacturing a milk product, comprising the steps of: providing ultrafiltrated milk; adding water and a fat source to said ultrafiltrated milk to obtain a first combination of ultrafiltrated milk, water and a fat source; and adding a source of protein to said first combination to form a second combination. .

It has now turned out to be possible to avoid the above disadvantages by the method according to the invention, which is a process for manufacturing a milk product by a 2-step filtration process, wherein pH of milk is adjusted to 7.0 to 9.5, whereafter it Is ultrafiltrated; the ultrafiltration permeate is nanofiltrated; and the nanofiltration permeate is mixed with the ultrafiltration retentate and water; and pH is adjusted to the original pH of the milk.

Thereby a product can be obtained, which is a stabilizer-free, palatable low-carbohydrate milk product with 90 to 250 kJ/140 g, and with essentially all of the original milk calcium retained, and all of the original milk proteins, and without added calcium, which milk product has the milk taste and milk mouth feel, but less sweetness, thus requiring no masking of unwanted water taste or other off-flavors.

### Brief description of the drawing

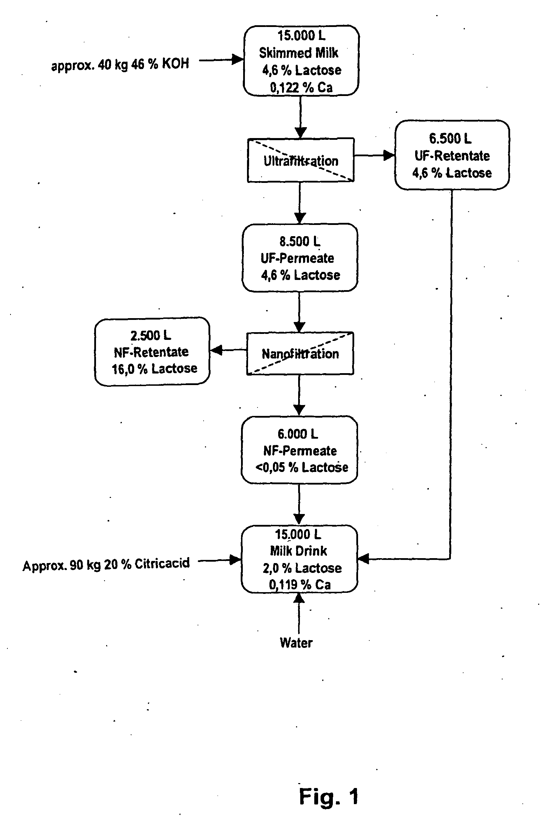

On the drawing
Fig. 1 is a flow sheet of the process of the example 1 showing the production of low-carbohydrate milk with the original calcium/protein ratio.
Fig. 2 is a photo of the products obtained in the comparative example.
Fig. 3 shows the result of a particle size distibution measurement of the products obtained in the comparative example.

### Detailed description of the invention

The following definitions and abbreviations are used in the present description.

The expression "low-carbohydrate milk product" means any milk product where the original lactose content of approximately 4.8 % is reduced.

The expression "mill" covers in principle all mammal milk, but with focus on bovine milk. The fat content of bovine milk can be from approximately 0.05 weight% to the natural level in raw milk, 4.2 weight%. Milk from other mammals can have different contents of fat.
CF = concentration factor
UF = Ultrafiltration
NF = Nanofiltration

The method according to the invention is a process for manufacturing a stabilizer-free, palatable low-carbohydrate milk product by a 2-step filtration process, wherein pH of milk is adjusted to 7.0 to 9.5, whereafter the milk is ultrafiltrated; the ultrafiltration permeate is nanofiltrated; and the nanofiltration permeate is mixed with the ultrafiltration retentate and water; and pH is adjusted to the original pH of the milk.

Prior to the filtration, the milk is pH-adjusted with a food grade base, preferably KOH, NaOH or a mix. pH is adjusted to 7.0 to 9.5.

Normally, use of a lower pH results in poorer effect, while a pH higher than 9.5 tends to destroy the micelles. pH-values In between, for example as 7.5 and 9.0, can be used. Normally, pH 8.5 is preferred.

The process can be carried out at any temperature between 2 °C and 50 °C. This is not essential to the result. For reasons of bacteriology, however, about 10 °C would normally be used.

After the filtration, the end product is pH-adjusted to the original pH-level of the milk with a food grade acid, preferably citric acid or phosphoric acid.

The normal pH is 6.6 to 6.8, in particular 6.7, but in certain cases it might deviate somewhat therefrom.

The UF-retentate is mixed with NF-permeate and water to give the end product the desired protein and/or fat level.

A product prepared in this manner will normally have the contents of protein, fat and calcium of the starting material. There is no sediment in the product.

It is possible to subject the product prepared to a treatment with lactase enzyme in order to reduce or remove the remaining lactose. Hereby a sweeter product, or a product that can be tolerated by people with lactose intolerance, is obtained.

### Examples

The Invention is explained in more detail by way of the following non-limiting example.

### Example 1:

● 15 000 litres of skimmed milk were pH-adjusted to 8.5 with approximately 40 kg of 46 % KOH.
● The skimmed milk was ultrafiltrated to a concentration factor (CF) of 2.3 on a UF-unit, equipped with spiral elements (Desal; cut-off: 10 000 MW). The result was 6 500 litres of UF-retentate and 8 500 litres of UF-permeate.
● The UF-permeate is processed on a nanofiltration (NF) unit, equipped with spiral elements (Desal; cut-off. 200 MW). The CF is 3.4, resulting in 2 500 litres of NF-retentate and 6 000 litres of NF-permeate.
● The 6 000 litres of NF-permeate were mixed with the 6 500 litres of UF-retentate.
● The mix was pH-adjusted to 6.7 by adding approximately 90 kg of a 20 % citric acid solution.
● The mix was standardized to the original skimmed milk protein level by adding water; giving a milk with 2.0 % of lactose, 3.5 % of protein, and 0.119 % of calcium, corresponding to 98 % of the original value.

| | Unit | Skimmed Milk | Product = Milk Drink |
|---|---|---|---|
| Protein | % | 3.5 | 3.5 |
| Fat | % | <0.1 | <0.1 |
| Lactose | % | 4.8 | 2.0 |
| Calcium | % | 0.122 | 0.119 |
| Energy | kJ/ 100 g | 140 | 95 |

### Comparative example:

By use of the method according to the invention a product ("Prod-pH 8.5") was produced and also a similar product without the initial pH-increase and subsequent pH-reduction ("Prod-pH 6.7"), which was subsequently added calcium in the form of a milk mineral mixture, "Capolac" from Arla Foods.

### 1. UF at pH = 8.5; Prod-pH 8.5:

| | |
|---|---|
| pH-adjustment | 600 litres of skimmed milk are pH-adjusted to 8.5 with dilute NaOH |
| UF-apparatus | Is filled up with milk to avoid dilution of the product |
| Feed pressure | 2.0 bar |
| Pressure diff. | 2.5 bar |
| Temperature | 10°C |
| Retentate to tank | 4-5000 litres/hour |
| Diafiltration | None |
| CF | 2.3 |
| Collection | 25 litres of retentate are collected |

### The UF-permeate is filtrated on an NF-apparatus under the following conditions:

| | |
|---|---|
| Feed pressure | 20.0 bar |
| Pressure diff. | 2.0 bar |
| Temperature | 10 °C |
| Retentate to tank | 4-5000 litres/hour |
| Diafiltration | None |
| Collection | 23 litres of permeate are collected |

### Mixing, pasteurization, filling and labeling:

| | |
|---|---|
| Mixing | The UF-retentatet is mixed with the NF-permeate and water to the original protein level of 3.5 |
| pH-adjustment | The mix is pH-adjusted to 6.7 with 20% citric acid |
| Pasteurization | 72 °C, 15 seconds and homogenized at 50 °C and 200 bar |
| Product labeling | **Prod-pH 8.5** |

### Comparative product:

### 2. UF at pH = 6.7; Prod-pH 6.7:

| | |
|---|---|
| pH-adjustment | No pH-adjustment of the feed, which is 600 litres of skimmed milk |
| UF-apparatus | Is filled up with milk to avoid dilution of the product |
| Feed pressure | 2.0 bar |
| Pressure diff. | 2.5 bar |
| Temperature | 10°C |
| Retentate to tank | 4-5000 litres/hour |
| Diafiltration | None |
| CF | 2.3 |
| Collection | 25 litres of retentate are collected |

### The UF-permeate is filtrated on an NF-apparatus under the following conditions:

| | |
|---|---|
| Feed pressure | 20.0 bar |
| Pressure diff. | 2.0 bar |
| Temperature | 10°C |
| Retentate to tank | 4-5000 litres/hour |
| Diafiltration | None |
| Collection | 23 litres of permeate are collected |

### Mixing, pasteurization, filling and labeling:

| | |
|---|---|
| Mixing | The UF-retentate is mixed with the NF-permeate and water to the original protein level of 3.5 |
| Ca-dosing | The mixture is added 0.12 % of Capolac (= 0.03 % Ca) |
| Pasteurization | 72 °C, 15 seconds and homogenized at 50 °C and 200 bar |
| Product labeling: | **Prod-pH 6.7** |

Thereby the following analytical results were obtained:

| Analysis | Unit | Feed = skimmed milk | Prod-pH 8.5 | Prod-pH 6.7 |
|---|---|---|---|---|
| Protein | % | 3.5 | 3.5 | 3.5 |
| Fat | % | <0.1 | <0.1 | <0.1 |
| Lactose | % | 4.7 | 2.1 | 2.1 |
| Calcium | % | 0.11 | 0.11 | 0.11 |
| Energy | kJ/100g | 140 | 95 | 95 |

Thus, it is a matter of two products corresponding to the feed mixture, skimmed milk, but the energy content is reduced by reduction of the lactose content. Although the calcium content is the same in the two products there is a significant difference in sedimentation from the two products. In "Prod-pH 6.7" there is a white sediment which it is very difficult to shake up, whereas there is no sediment in "Prod-pH 8.5". Particle measurement has shown that "Prod-pH 6.7" contains 2-10 µm of particles (Capolac), which "Prod-pH 8.5" does not.

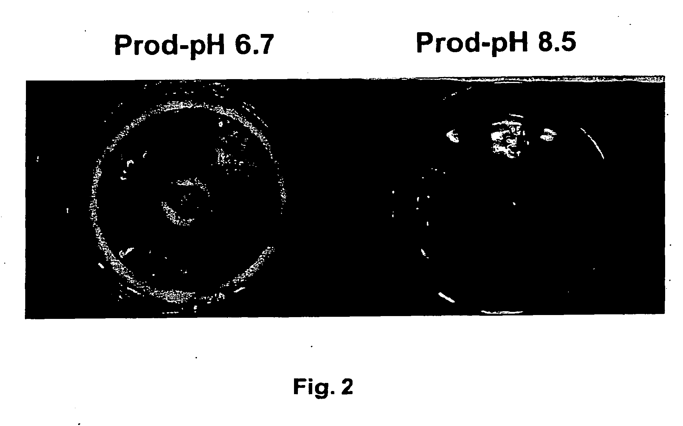

Fig. 2 shows the clear product of the invention (Prod-pH 8.5) and the comparative product (Prod-pH 6.7) containing a white sediment. The photo is taken from the bottom of 1/2 litre PE bottles after emptying for Prod-pH 6.7 and Prod-pH 8.5, respectively. It shows sediment in the Prod-pH 6.7 bottle which is difficult to suspend. There is no sediment in the Prod-pH 8.5 bottle.

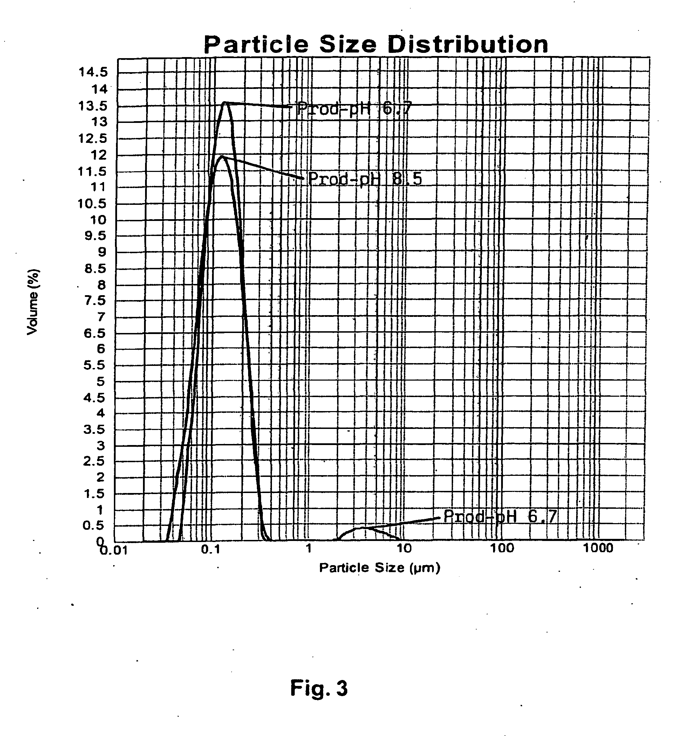

Fig. 3 shows the particle size distribution of Prod-pH 8.5 compared to Prod-pH 6.7 it is seen that Prod-pH 6.7 has particles in the area of 1-10 µm, while the product of the invention, Prod-pH 8.5 has no particles in this area.

## Claims

1. A process for manufacturing a stabilizer-free, palatable low-carbohydrate milk product with 90 to 250 kJ/100 g, and with essentially all of the original milk calcium retained, and all of the original milk proteins, and without added calcium, which milk product has the milk taste and milk mouth feel, but less sweetness, thus requiring no masking of unwanted water taste or other off-flavors by a 2-step filtration process, wherein pH of milk is adjusted to 7.0 to 9.5, where after it is ultrafiltrated; the ultrafiltration permeate is nanofiltrated; and the nanofiltration permeate is mixed with the ultrafiltration retentate and water; and pH is adjusted to the original pH of the milk.

2. A process of claim 1, wherein pH is adjusted to 7.5 to 9.0 prior to ultrafiltration.

3. A process of claim 2, wherein pH is adjusted to 8.0 to 8.5 prior to ultrafiltration.

4. A process of claim 3, wherein pH is adjusted to 8.5 prior to ultrafiltration, and pH is adjusted to 6.7 in the final product.

5. A process of claim 1, wherein the final mixture is hydrolyzed by lactase enzyme.

## Patentansprüche

1. Verfahren zur Herstellung eines stabilisatorfreies, schmackhaftes kohlenhydratarmes Milchprodukt mit 90 bis 250 kJ/100 g, und wobei das ganze ursprüngliche Milchcalcium im Wesentlichen beibehalten ist, und allen ursprünglichen Milchproteinen, und ohne Zusatz von Calcium, welches Milchprodukt den Milchgeschmack und das Milch-Mundgefühl, aber weniger Süße, aufweist, wobei es folglich keiner Maskierung von unerwünschtem Wassergeschmack oder anderen Fremdaromen bedarf, durch ein zweischrittiges Filtrationsverfahren, wobei das pH der Milch auf 7,0 bis 9,5 eingestellt wird, wonach sie ultrafiltriert wird; das Ultrafiltrationspermeat nanofiltriert wird; und das Nanofiltrationspermeat mit dem Ultrafiltrationsretentat und Wasser gemischt wird; und das pH auf das ursprüngliche pH der Milch eingestellt wird.

2. Verfahren nach Anspruch 1, wobei das pH vor der Ultrafiltration auf 7,5 bis 9,0 eingestellt wird.

3. Verfahren nach Anspruch 2, wobei das pH vor der Ultrafiltration auf 8,0 bis 8,5 eingestellt wird.

4. Verfahren nach Anspruch 3, wobei das pH vor der Ultrafiltration auf 8,5 eingestellt wird, und das pH im Endprodukt auf 6,7 eingestellt wird.

5. Verfahren nach Anspruch 1, wobei die Endmischung durch Laktase-Enzym hydrolysiert wird.

## Revendications

1. Procédé de fabrication d'un produit laitier sans stabilisant, savoureux et à faible teneur en hydrates de carbone avec 90 à 250 kJ pour 100 g, et avec essentiellement la totalité du calcium de lait d'origine conservé, et toutes les protéines de lait d'origine, et sans ajout de calcium, ledit produit laitier ayant le goût de lait et la sensation en bouche du lait, mais moins de douceur, donc ne nécessitant pas de masquage d'un goût de l'eau non désiré ou d'autres mauvais goûts par un procédé de filtration en deux étapes, dans lequel le pH du lait est ajusté à 7,0 à 9,5, ensuite il est ultrafiltré; le perméat d'ultrafiltration est nanofiltré; et le perméat de nanofiltration est mélangé avec le rétentat d'ultrafiltration et de l'eau; et le pH est ajusté à l'origine du pH du lait.

2. Procédé selon la revendication 1, dans lequel le pH est ajusté à 7,5 à 9,0 avant l'ultrafiltration.

3. Procédé selon la revendication 2, dans lequel le pH est ajusté à 8,0 à 8,5 avant l'ultrafiltration.

4. Procédé selon la revendication 3, dans lequel le pH est ajusté à 8,5 avant l'ultrafiltration, et le pH est ajusté à 6,7 dans le produit final.

5. Procédé selon la revendication 1, dans lequel le mélange final est hydrolysé par une enzyme lactase.
